# FASCICULE DE BREVET EUROPEEN

(11) **EP 2 906 394 B1**
(45) Date de publication et mention de la délivrance du brevet: **16.11.2016**
(21) Numéro de dépôt: 13774447.0
(22) Date de dépôt: 11.10.2013
(51) Int. Cl.: B25D 9/12, F16J 15/32

(54) **APPAREIL HYDRAULIQUE À PERCUSSIONS COMPRENANT UN DISPOSITIF D'ÉTANCHÉITÉ**
HYDRAULISCHE BEAUFSCHLAGUNGSVORRICHTUNG MIT EINER ABDICHTUNGSVORRICHTUNG
HYDRAULIC STRIKING APPARATUS INCLUDING A SEALING DEVICE

(30) Priorité: 15.10.2012 FR 1259801
(43) Date de publication de la demande: 19.08.2015
(73) Titulaire: Montabert, 69800 Saint Priest (FR)
(72) Inventeur: ESCOLLE, Michel, F-01120 Nievroz (FR)
(74) Mandataire: Verriest, Philippe
(86) Numéro de dépôt international: PCT/EP2013/071269
(87) Numéro de publication internationale: WO 2014/060304

(56) Documents cités:
- WO-A1-2011/123020
- US-A- 4 953 876
- US-A- 5 149 107
- US-A1- 2004 251 636

## Description

La présente invention concerne un dispositif d'étanchéité pour appareil hydraulique à percussions, et un appareil hydraulique à percussions comprenant un tel dispositif d'étanchéité.

Les appareils hydrauliques à percussions, de type brise-roche ou perforatrice, sont généralement équipés d'un corps de guidage comprenant un alésage, et d'un piston de frappe monté coulissant à l'intérieur de l'alésage et agencé pour être entraîné en translation de façon alternative par un fluide incompressible. Dans le cas particulier d'un appareil rotopercutant hydraulique, c'est-à-dire du type perforatrice, le piston de frappe peut éventuellement en outre être entraîné en rotation autour de son axe longitudinal.

Afin d'assurer une étanchéité entre le corps de guidage et le piston de frappe d'un appareil hydraulique à percussions, et donc d'éviter une perte de fluide incompressible, le corps de guidage comporte un logement annulaire, coaxial au piston de frappe et débouchant dans l'alésage, dans lequel est monté un dispositif d'étanchéité.

Un premier type de dispositif d'étanchéité connu consiste en un joint d'étanchéité monobloc présentant une section en U et comportant ainsi une première lèvre d'étanchéité interne destinée à coopérer avec la surface extérieure du piston de frappe afin d'assurer une étanchéité dynamique entre le joint d'étanchéité et le piston de frappe en mouvement, et une lèvre d'étanchéité externe destinée à coopérer avec le fond du logement annulaire du corps de guidage afin d'assurer une étanchéité statique entre le joint d'étanchéité et le corps de guidage.

Un tel dispositif d'étanchéité assure une étanchéité satisfaisante à faible vitesse de translation et faible fréquence de frappe du piston de frappe.

Cependant, lors des déplacements en translation du piston de frappe, le contact entre un tel dispositif d'étanchéité et le piston de frappe engendre un frottement non négligeable, et donc un échauffement par friction du piston de frappe pouvant aller jusqu'à la destruction de la lèvre d'étanchéité interne.

De plus, dans le cas d'un appareil rotopercutant hydraulique, la rotation du piston de frappe sans translation de ce dernier ne permet pas d'assurer une lubrification et un refroidissement corrects de la lèvre d'étanchéité interne. Il en résulte une destruction rapide de la lèvre d'étanchéité interne.

Un deuxième type de dispositif d'étanchéité connu consiste en un dispositif d'étanchéité comprenant :
- une bague d'étanchéité interne comprenant une portion d'étanchéité interne annulaire pourvue d'une lèvre d'étanchéité destinée à coopérer de manière étanche avec la surface extérieure du piston de frappe, et
- un élément d'étanchéité externe annulaire distinct de la bague d'étanchéité interne et monté autour de la portion d'étanchéité interne, l'élément d'étanchéité externe étant destiné à prendre appui de manière étanche dans le fond du logement annulaire recevant le dispositif d'étanchéité.

Un tel dispositif d'étanchéité assure une étanchéité satisfaisante à grande vitesse de translation et importante fréquence de frappe du piston de frappe, et un faible frottement sur le piston de frappe, donc un faible échauffement par friction de la lèvre d'étanchéité.

Toutefois, dans certaines conditions de fonctionnement d'un appareil hydraulique à percussions, la lèvre d'étanchéité d'un tel dispositif d'étanchéité peut être soumise à de forts pics de pression, générés par des mouvements alternatifs très rapides du fluide incompressible commandant les déplacements du piston de frappe, qui peuvent entraîner la rupture de la lèvre d'étanchéité, et donc des fuites de fluide incompressible.

La présente invention vise à remédier à cet inconvénient.

Le document US 4 953 876 divulgue un dispositif d'étanchéité destiné à être monté dans un logement annulaire ménagé sur un premier élément de manière à réaliser une étanchéité entre le premier élément et un deuxième élément, le dispositif d'étanchéité comprenant une bague d'étanchéité interne, et un élément d'étanchéité externe monté autour de la bague d'étanchéité interne. La bague d'étanchéité interne comporte une première portion d'étanchéité pourvue d'une lèvre d'étanchéité annulaire destinée à coopérer de manière étanche avec la surface extérieure du deuxième élément, une deuxième portion d'étanchéité interne annulaire décalée axialement par rapport à la première portion d'étanchéité interne et délimitée intérieurement par au moins une surface annulaire convergeant en direction de la lèvre d'étanchéité, et une gorge annulaire disposée entre la lèvre d'étanchéité et la surface annulaire.

Le problème technique à la base de l'invention consiste donc à fournir un dispositif d'étanchéité qui soit de structure simple, économique et fiable.

A cet effet, la présente invention concerne un appareil hydraulique à percussions selon la revendication 1.

La configuration de la surface de protection convergente permet de former, avec la surface extérieure du piston de frappe, un gicleur annulaire progressif adapté pour réduire progressivement l'épaisseur et le débit du fluide incompressible s'écoulant en direction de la lèvre d'étanchéité, et donc de diminuer l'amplitude des pics de pression générés par l'écoulement du fluide incompressible.

En outre, la présence de la gorge annulaire entre la lèvre d'étanchéité et la surface de protection convergente permet de diminuer la vitesse d'arrivée du fluide incompressible sur la lèvre d'étanchéité de par l'augmentation de la surface de passage du fluide incompressible, ce qui permet encore d'amortir les pics de pression résiduels.

Ainsi, la configuration de la bague d'étanchéité interne permet de réduire fortement l'amplitude des pics de pression évoqués précédemment, et donc d'éviter une rupture de la lèvre d'étanchéité. De ce fait, le dispositif d'étanchéité selon l'invention présente une fiabilité accrue par rapport à celle des dispositifs d'étanchéité de l'art antérieur.

En outre, la présence de la surface de protection convergente et de la gorge annulaire sur la bague d'étanchéité interne permet d'assurer, avec un même dispositif, d'une part l'étanchéité entre le piston de frappe et le corps de guidage dans lequel est monté le piston de frappe, et d'autre part la protection de la lèvre d'étanchéité. Il en résulte une diminution du nombre des pièces constitutives de l'appareil à percussion et du nombre d'usinages à réaliser dans le corps de guidage de l'appareil à percussion, ce qui diminue fortement les coûts de fabrication de ce dernier.

Avantageusement, le passage d'écoulement débouche dans la gorge annulaire.

Selon un mode de réalisation de l'invention, la lèvre d'étanchéité fait saillie radialement vers l'intérieur par rapport à la portion de protection.

Avantageusement, l'élément d'étanchéité externe est agencé pour exercer un effort de compression sur la portion d'étanchéité interne en conditions d'utilisation.

Selon un mode de réalisation de l'invention, la gorge annulaire est délimitée par la lèvre d'étanchéité et la portion de protection.

De préférence, la surface de protection convergente s'étend à partir d'une extrémité de la bague d'étanchéité interne.

Selon un mode de réalisation de l'invention, la surface de protection convergente présente un angle au sommet compris entre 10 et 40°. De ce fait, les composantes axiales des forces hydrauliques résultant des pics de pression restent faibles sur la surface de protection convergente.

Selon un mode de réalisation de l'invention, la portion de protection s'étend longitudinalement sur plus de la moitié de la longueur de la bague d'étanchéité interne.

Selon un mode de réalisation de l'invention, la surface de protection convergente s'étend longitudinalement sur au moins 20% de la longueur de la bague d'étanchéité interne.

Selon une caractéristique de l'invention, la portion de protection est délimitée intérieurement en outre par au moins une surface de protection divergente annulaire et divergeant en direction de la lèvre d'étanchéité, la surface de protection divergente étant disposée entre la surface de protection convergente et la lèvre d'étanchéité, et délimitant au moins en partie la gorge annulaire.

Selon un mode de réalisation de l'invention, la surface de protection divergente présente un angle au sommet inférieur à 140°.

Selon un mode de réalisation de l'invention, la surface de protection divergente présente une hauteur radiale d'au moins 5/10^{ème} de millimètre.

Selon un mode de réalisation de l'invention, la surface de protection convergente et/ou la surface de protection divergente sont sensiblement tronconiques.

De façon préférentielle, la portion de protection est délimitée intérieurement en outre par au moins une surface de protection intermédiaire sensiblement cylindrique et disposée entre la surface de protection convergente et la gorge annulaire. La présence d'une telle surface de protection intermédiaire permet de former, avec la surface extérieure du piston de frappe, un gicleur annulaire adapté pour réduire fortement le débit du fluide incompressible en provenance de la surface de protection convergente, et donc les fluctuations de pression associées. Il en résulte une protection encore améliorée de la lèvre d'étanchéité.

Selon un mode de réalisation de l'invention, la surface de protection intermédiaire est disposée entre la surface de protection convergente et la surface de protection divergente. De préférence, la surface de protection intermédiaire s'étend dans le prolongement de la surface de protection convergente.

Avantageusement, la surface de protection divergente s'étend dans le prolongement de la surface de protection intermédiaire. Une telle disposition de la surface de protection divergente permet de transformer la composante purement axiale de la vitesse du fluide incompressible en provenance de la surface de protection intermédiaire en une composante axiale et une composante radiale, et donc de diminuer encore la vitesse d'arrivée du fluide incompressible sur la lèvre d'étanchéité.

Avantageusement, au moins l'une parmi les surfaces de protection convergente, intermédiaire et divergente s'étend sensiblement coaxialement à l'axe longitudinal de la bague d'étanchéité interne. De façon avantageuse, les surfaces de protection convergente, intermédiaire et divergente s'étendent sensiblement coaxialement à l'axe longitudinal de la bague d'étanchéité interne.

De façon avantageuse, le dispositif d'étanchéité comprend un élément de maintien distinct de la bague d'étanchéité interne et monté autour de la portion de protection, l'élément de maintien étant annulaire et destiné à prendre appui de manière étanche dans le fond du logement annulaire. Ces dispositions permettent de maintenir l'espace entre le piston de frappe et les première, deuxième et troisième surfaces de protection sensiblement constant quelle que soit la pression du fluide incompressible. Il en résulte une protection contre les pics de pression du fluide quasiment indépendante du niveau de pression moyen de ce dernier.

Avantageusement, l'élément de maintien est agencé pour exercer un effort de compression sur la portion de protection en conditions d'utilisation.

Selon un mode de réalisation de l'invention, le dispositif d'étanchéité est agencé de telle sorte que les efforts de compression exercés par l'élément d'étanchéité externe sur la portion d'étanchéité interne sont supérieurs aux efforts de compression exercés par l'élément de maintien sur la portion de protection.

De préférence, l'élément de maintien est décalé axialement de l'élément d'étanchéité externe.

Selon un mode de réalisation de l'invention, l'élément d'étanchéité externe et l'élément de maintien comportent respectivement une première et une deuxième surfaces d'appui internes, et dans lequel la portion d'étanchéité interne et la portion de protection comportent respectivement une première et une deuxième surfaces d'appui externes agencées pour coopérer respectivement avec les première et deuxième surfaces d'appui internes. Ces dispositions permettent d'augmenter les frottements exercés sur la surface extérieure de la bague d'étanchéité interne, et ainsi de limiter, lors d'une éventuelle rotation du piston de frappe autour de son axe longitudinal, les risques de rotation relative entre la bague d'étanchéité interne et l'élément d'étanchéité externe. Il en résulte une diminution des risques d'usure du dispositif d'étanchéité au niveau de l'interface entre la bague d'étanchéité interne et l'élément d'étanchéité externe, et donc des risques de fuite entre le corps de guidage et le piston de frappe.

Selon un mode de réalisation de l'invention, la distance entre le point d'appui des premières surfaces d'appui interne et externe et le point d'appui des deuxièmes surfaces d'appui interne et externes est supérieure à la hauteur radiale de la bague d'étanchéité interne. Ces dispositions permettent d'améliorer la stabilité de la bague d'étanchéité interne, et donc de la lèvre d'étanchéité de celle-ci, ce qui diminue encore les risques de fuite entre le corps de guidage et le piston de frappe. Le fait d'améliorer la stabilité de la bague d'étanchéité interne permet en outre d'assurer un fonctionnement du dispositif d'étanchéité dans une position de fonctionnement optimale, ce qui réduit encore la vitesse d'usure du dispositif d'étanchéité.

Selon un mode de réalisation de l'invention, la surface d'appui externe ménagée sur la portion de protection est sensiblement cylindrique et s'étend sensiblement parallèlement à l'axe longitudinal de la bague d'étanchéité interne.

Selon un mode de réalisation de l'invention, la surface d'appui externe ménagée sur la portion de protection est concave.

Selon un mode de réalisation de l'invention, les première et deuxième surfaces d'appui internes sont sensiblement cylindriques et s'étendent sensiblement parallèlement à l'axe longitudinal de la bague d'étanchéité interne.

Selon un mode de réalisation de l'invention, les première et deuxième surfaces d'appui externes sont sensiblement cylindriques et s'étendent sensiblement parallèlement à l'axe longitudinal de la bague d'étanchéité interne.

Selon un mode de réalisation de l'invention, les première et deuxième surfaces d'appui externes s'étendent dans le prolongement l'une de l'autre.

Selon une première alternative de l'invention, l'élément de maintien vient de matière avec l'élément d'étanchéité externe. Ainsi, l'élément de maintien et l'élément d'étanchéité sont monobloc.

Selon une deuxième alternative de l'invention, l'élément de maintien et l'élément d'étanchéité externe sont distincts l'un de l'autre.

Selon un mode de réalisation de l'invention, l'élément de maintien et l'élément d'étanchéité externe sont formés respectivement par deux joints toriques de sections identiques ou différentes et/ou de rayons identiques ou différents. Selon un mode de réalisation de l'invention, l'élément de maintien présente une section inférieure à celle de l'élément d'étanchéité externe.

Selon un mode de réalisation de l'invention, l'élément de maintien est formé par un joint annulaire à quatre lobes, et plus précisément un joint annulaire comprenant une section à quatre lobes, soit deux lobes radialement intérieurs et deux lobes radialement extérieurs.

Selon un mode de réalisation de l'invention, la lèvre d'étanchéité comporte une arête d'étanchéité destinée à coopérer de manière étanche avec la surface extérieure du piston de frappe.

Préférentiellement, la bague d'étanchéité interne comporte, à chacune de ses extrémités, un chanfrein externe annulaire. La présence de tels chanfreins permet de faciliter le montage du dispositif d'étanchéité dans le logement annulaire ménagé sur le corps de guidage, et également d'éviter un endommagement de la bague d'étanchéité interne sur les arêtes du logement annulaire, c'est-à-dire les arêtes délimitées par les faces latérales du logement annulaire et la paroi intérieure du corps de guidage, qui pourrait nuire à l'étanchéité entre le dispositif d'étanchéité et le piston de frappe.

Selon un mode de réalisation de l'invention, chaque chanfrein externe s'étend longitudinalement et radialement sur au moins 2/10^{ème} de millimètre.

Selon un mode de réalisation de l'invention, chaque chanfrein externe présente un angle de chanfrein compris entre 10 et 60° par rapport à un plan perpendiculaire à l'axe longitudinal de la bague d'étanchéité interne.

Selon un mode de réalisation de l'invention, la portion de protection comprend au moins une encoche radiale débouchant dans la face d'extrémité de la bague d'étanchéité interne opposée à la lèvre d'étanchéité par rapport à la gorge annulaire. Selon un mode de réalisation de l'invention, l'au moins une encoche radiale débouche également dans la surface de protection convergente. Selon un mode de réalisation de l'invention, l'au moins une encoche radiale débouche en outre dans le chanfrein externe correspondant.

Selon un mode de réalisation de l'invention, la portion de protection comprend au moins une encoche longitudinale interne débouchant dans la gorge annulaire, et de préférence dans la surface de protection divergente. Selon un mode de réalisation de l'invention, l'au moins une encoche longitudinale débouche en outre dans les surfaces de protection convergente et intermédiaire. Selon un mode de réalisation de l'invention, l'au moins une encoche longitudinale débouche également dans la face d'extrémité de la portion de protection opposée à la portion d'étanchéité interne.

Selon un mode de réalisation de l'invention, la portion de protection comporte au moins une rainure annulaire débouchant dans la surface de protection convergente et/ou la surface de protection intermédiaire.

Selon un mode de réalisation de l'invention, le corps de guidage et le piston de frappe délimitent un canal d'arrivée de fluide annulaire débouchant du côté de la face d'extrémité de la portion de protection opposée à la portion d'étanchéité interne, le diamètre interne de la bague d'étanchéité interne, au niveau de ladite face d'extrémité de la portion de protection, étant supérieur ou égal au diamètre de l'alésage, au niveau de l'extrémité du canal d'arrivée de fluide tournée vers la bague d'étanchéité interne.

En d'autres termes, la hauteur radiale de la bague d'étanchéité interne, au niveau de la face d'extrémité de la portion de protection opposée à la portion d'étanchéité interne, est supérieure ou égale à la hauteur radiale de l'extrémité du canal d'arrivée de fluide tournée vers la bague d'étanchéité interne.

Selon un mode de réalisation de l'invention, la surface de protection intermédiaire comprend un diamètre interne compris entre une valeur minimale correspondant au diamètre interne de la lèvre d'étanchéité majoré de 4/10^{ème} de millimètre et une valeur maximale correspondant au diamètre externe du piston de frappe majoré de 5/10^{ème} de millimètre.

De toute façon l'invention sera bien comprise à l'aide de la description qui suit en référence au dessin schématique annexé représentant, à titre d'exemples non limitatifs, plusieurs formes d'exécution de ce dispositif d'étanchéité.
Figure 1 est une vue en coupe d'un dispositif d'étanchéité selon un premier mode de réalisation de l'invention.
Figure 2 est une vue éclatée en coupe du dispositif d'étanchéité de la figure 1.
Figure 3 est une vue partielle en coupe d'un appareil hydraulique à percussion équipé du dispositif d'étanchéité de la figure 1.
Figures 4 à 10 sont des vues partielles en coupe de dispositifs d'étanchéité selon d'autres modes de réalisation de l'invention.

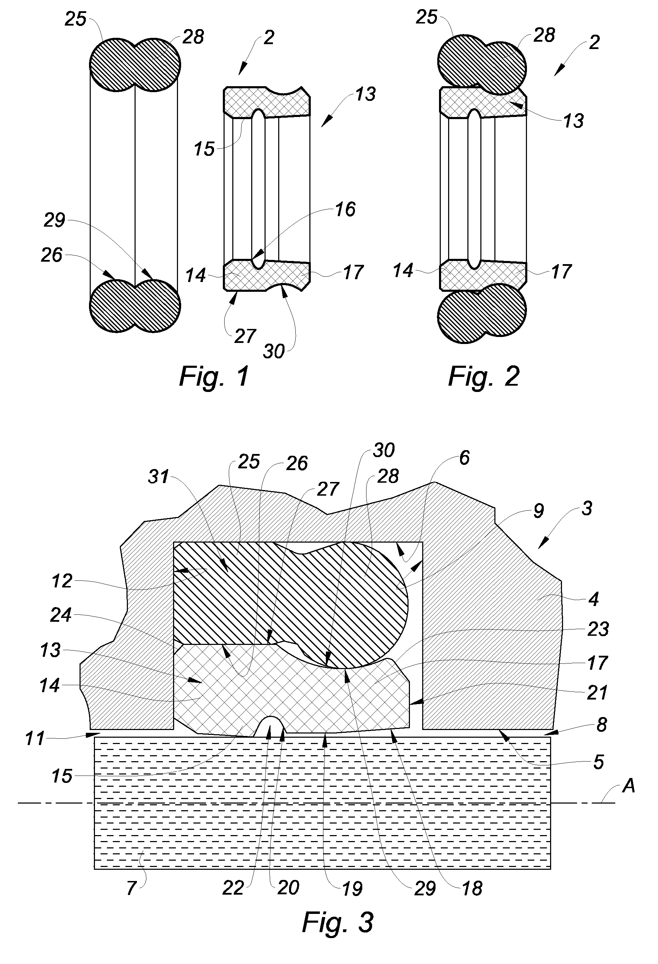

Les figures 1 à 3 représentent un dispositif d'étanchéité 2 pour un appareil hydraulique à percussions 3 équipé d'un corps de guidage 4 comprenant un alésage 5 et un logement annulaire 6 débouchant dans l'alésage 5, et d'un piston de frappe 7 de forme cylindrique monté coulissant à l'intérieur de l'alésage 5 et agencé pour être entraîné en translation de façon alternative par un fluide incompressible, tel que de l'huile hydraulique. Selon une variante de réalisation de l'invention, le dispositif d'étanchéité 2 pourrait être destiné à équiper un appareil hydraulique rotopercutant, et notamment un appareil hydraulique dans lequel le piston de frappe 7 et le corps de guidage 4 peuvent être entraînés en rotation l'un par rapport à l'autre.

Comme montré sur la figure 3, le dispositif d'étanchéité 2 est destiné à être monté dans le logement annulaire 6 de manière à réaliser une étanchéité entre le corps de guidage 4 et le piston de frappe 7, et plus particulièrement de manière à empêcher un passage de fluide incompressible d'un premier canal de fluide 8 annulaire délimité entre le corps de guidage 4 et le piston de frappe 7 et débouchant du côté d'une première paroi latérale 9 du logement annulaire 6, vers un deuxième canal de fluide 11 annulaire délimité entre le corps de guidage 4 et le piston de frappe 7 et débouchant du côté d'une deuxième paroi latérale 12 du logement annulaire 6.

Le dispositif d'étanchéité 2 comprend une bague d'étanchéité interne 13. La bague d'étanchéité interne 13 peut être réalisée en plastique dur, et par exemple à base de Téflon. La bague d'étanchéité interne 13 comprend une portion d'étanchéité interne 14 annulaire qui est pourvue d'une lèvre d'étanchéité annulaire 15 destinée à coopérer de manière étanche avec la surface extérieure du piston de frappe 7. Avantageusement, la lèvre d'étanchéité 15 comporte une arête d'étanchéité 16 destinée à coopérer de manière étanche avec la surface extérieure du piston de frappe 7.

La bague d'étanchéité interne 13 comprend en outre une portion de protection 17 annulaire décalée axialement par rapport à la portion d'étanchéité interne 14. La bague d'étanchéité interne 13 est conformée de telle sorte que la lèvre d'étanchéité 15 fait saillie radialement vers l'intérieur par rapport à la portion de protection 17. Ainsi, la portion de protection 17 est agencée pour délimiter, en conditions d'utilisation, un passage d'écoulement annulaire avec le piston de frappe 7.

La portion de protection 17 est délimitée intérieurement par une première, une deuxième et une troisième surfaces de protection 18, 19, 20 s'étendant sensiblement coaxialement à l'axe longitudinal A de la bague d'étanchéité interne 14.

La première surface de protection 18 s'étend à partir d'une extrémité de la bague d'étanchéité interne 13, et plus particulièrement à partir d'une face d'extrémité 21 de la portion de protection 17 opposée à la portion d'étanchéité interne 14. La première surface de protection 18 est avantageusement tronconique et converge en direction de la lèvre d'étanchéité 15. La première surface de protection 18 présente par exemple un angle au sommet compris entre 10 et 40°. La première surface de protection 18 peut par exemple en outre s'étendre longitudinalement sur au moins 20% de la longueur de la bague d'étanchéité interne 13.

La deuxième surface de protection 19 s'étend dans le prolongement de la première surface de protection 18 en direction de la lèvre d'étanchéité 15. La deuxième surface de protection 19 est sensiblement cylindrique, et présente de préférence un diamètre interne compris entre une valeur minimale correspondant au diamètre interne de la lèvre d'étanchéité 15 majoré de 4/10^{ème} de millimètre et une valeur maximale correspondant au diamètre externe du piston de frappe 7 majoré de 5/10^{ème} de millimètre.

La troisième surface de protection 20 s'étend dans le prolongement de la deuxième surface de protection 19. La troisième surface de protection 20 est tronconique et diverge en direction de la lèvre d'étanchéité 15. Selon un mode de réalisation de l'invention, la troisième surface de protection 20 présente une hauteur radiale d'au moins 5/10^{ème} de millimètre. Selon un mode de réalisation de l'invention, la troisième surface de protection 19 présente un angle au sommet inférieur à 140°.

La bague d'étanchéité interne 13 comprend également une gorge annulaire interne 22 destinée à être tournée vers le piston de frappe 7, la gorge annulaire interne 22 étant délimitée par la lèvre d'étanchéité 15 et la troisième surface de protection 20.

La bague d'étanchéité interne 13 comporte, à chacune de ses extrémités, un chanfrein externe annulaire 23, 24. Chaque chanfrein externe 23, 24 peut par exemple s'étendre longitudinalement et radialement sur au moins 2/10^{ème} de millimètre. Selon un mode de réalisation de l'invention, chaque chanfrein externe 23, 24 présente un angle de chanfrein compris entre 10 et 60° par rapport à un plan perpendiculaire à l'axe longitudinal A de la bague d'étanchéité interne 13.

Le diamètre interne de la bague d'étanchéité interne 13, au niveau de la face d'extrémité 21 de la portion de protection 17 opposée à la portion d'étanchéité interne 14, est supérieur ou égal au diamètre de l'alésage 5, au niveau de l'extrémité du premier canal de fluide 8 tournée vers la bague d'étanchéité interne 13. En d'autres termes, la hauteur radiale de la bague d'étanchéité interne 13, au niveau de la face d'extrémité 21 de la portion de protection 17, est supérieure ou égale à la hauteur radiale de l'extrémité du premier canal de fluide 8 tournée vers la bague d'étanchéité interne 13. Ces dispositions permettent d'éviter que le fluide incompressible en provenance du premier canal de fluide 8 ne vienne heurter frontalement la face d'extrémité 21 de la portion de protection 17, ce qui endommagerait rapidement la bague d'étanchéité interne 13.

Le dispositif d'étanchéité 2 comprend en outre un élément d'étanchéité externe 25 annulaire distinct de la bague d'étanchéité interne 13 et monté autour de la portion d'étanchéité interne 14. L'élément d'étanchéité externe 25 est plus particulièrement agencé pour exercer un effort radial sur la portion d'étanchéité interne 14 en conditions d'utilisation. Comme montré sur la figure 3, l'élément d'étanchéité externe 25 est destiné à prendre appui de manière étanche dans le fond du logement annulaire 6. L'élément d'étanchéité externe 25 peut par exemple être réalisé en élastomère.

L'élément d'étanchéité externe 25 comporte respectivement une surface d'appui interne 26, et la portion d'étanchéité interne 14 comporte une surface d'appui externe 27 agencée pour coopérer avec la surface d'appui interne 26 de l'élément d'étanchéité externe 25. Selon le mode de réalisation représenté sur les figures 1 à 3, la surface d'appui externe 27 ménagée sur la portion d'étanchéité interne 14 est cylindrique et s'étend sensiblement parallèlement à l'axe longitudinal A de la bague d'étanchéité interne 13.

Le dispositif d'étanchéité 2 comprend de plus un élément de maintien 28 annulaire distinct de la bague d'étanchéité interne 13 et monté autour de la portion de protection 17. L'élément de maintien 28 est plus particulièrement agencé pour exercer un effort radial sur la portion de protection 17 en conditions d'utilisation. L'élément de maintien 28 est décalé axialement de l'élément d'étanchéité externe 25 et est destiné à prendre appui de manière étanche dans le fond du logement annulaire 6. L'élément de maintien 28 peut par exemple être réalisé en élastomère.

L'élément de maintien 28 comporte une surface d'appui interne 29, et la portion de protection 17 comporte une surface d'appui externe 30 agencée pour coopérer avec la surface d'appui interne 29 de l'élément de maintien 28. Selon le mode de réalisation représenté sur les figures 1 à 3, la surface d'appui externe 30 ménagée sur la portion de protection 17 est concave. Avantageusement, le fond de la concavité de la surface d'appui externe 30 est plus proche de l'axe longitudinal A de la bague d'étanchéité interne 13 que la surface d'appui externe 27.

La distance entre le point d'appui des surfaces d'appui interne et externe 26, 27 et le point d'appui des surfaces d'appui interne et externes 29, 30 est de préférence supérieure à la hauteur radiale de la bague d'étanchéité interne 13 de manière à améliorer la stabilité de cette dernière.

Selon le mode de réalisation représenté sur les figures 1 à 3, l'élément de maintien 28 vient de matière avec l'élément d'étanchéité externe 25. Ainsi, l'élément de maintien 28 et l'élément d'étanchéité externe 25 forment une bague d'étanchéité externe 31 montée autour de la bague d'étanchéité interne 13.

Selon le mode de réalisation représenté sur les figures 1 à 3, la bague d'étanchéité externe 31 est symétrique par rapport à un plan de symétrie perpendiculaire à l'axe longitudinal A de la bague d'étanchéité interne 13 et s'étendant entre l'élément de maintien 28 et l'élément d'étanchéité externe 25. Ces dispositions permettent d'assurer un montage de la bague d'étanchéité externe 31 sur la bague d'étanchéité interne 13 dans les deux sens, ce qui limite les erreurs de montage.

Avantageusement, le dispositif d'étanchéité 2 est conformé de telle sorte que les efforts de compression exercés par l'élément d'étanchéité externe 25 sur la portion d'étanchéité interne 14 sont supérieurs aux efforts de compression exercés par l'élément de maintien 27 sur la portion de protection 17. Lorsque la bague d'étanchéité externe est symétrique, alors c'est la géométrie de la bague d'étanchéité interne 13, et plus particulièrement des surfaces d'appui externe 27, 30 ménagées sur la portion d'étanchéité interne 14 et la portion de protection 17, qui est adaptée de telle sorte que les efforts de compression exercés par l'élément d'étanchéité externe 25 sur la portion d'étanchéité interne 14 sont supérieurs aux efforts de compression exercés par l'élément de maintien 27 sur la portion de protection 17.

Les avantages résultant de la structure du dispositif d'étanchéité 2 selon l'invention, et plus particulièrement de la portion de protection 17 de ce dernier, vont être explicités ci-après.

Lors de l'entraînement en translation de façon alternative du piston de frappe 7 à l'intérieur du corps de guidage 4, du fluide incompressible sous pression s'écoule à haute vitesse dans le premier canal de fluide 8 en direction de la portion de protection 17.

Le fluide incompressible provenant du premier canal de fluide 8 s'écoule d'abord dans un premier passage annulaire, délimité par la surface extérieure du piston de frappe 7 et la première surface de protection 18, qui forme alors un gicleur annulaire progressif adapté pour réduire progressivement l'épaisseur et le débit du fluide incompressible provenant du canal de fluide 8, et donc de diminuer l'amplitude des pics de pression générés par l'écoulement du fluide incompressible

Ensuite, le fluide incompressible provenant du premier passage annulaire s'écoule dans un deuxième passage annulaire, délimité par la surface extérieure du piston de frappe 7 et la deuxième surface de protection 19, qui forme alors un gicleur annulaire adapté pour réduire fortement le débit du fluide incompressible en provenance de la première surface de protection 18, et donc les fluctuations de pression associées.

Enfin, la faible quantité d'huile provenant du deuxième passage annulaire s'écoule dans un volume annulaire important délimité par la gorge annulaire 22 et la surface extérieure du piston de frappe 7. La présence d'un tel volume annulaire permet de diminuer encore la vitesse d'arrivée du fluide incompressible sur la lèvre d'étanchéité de par l'augmentation de la surface de passage du fluide, ce qui permet encore d'amortir les pics de pression résiduels atteignant la lèvre d'étanchéité 15.

La configuration des première, deuxième et troisième surfaces de protection 18, 19, 20 et de la gorge annulaire 22 permet ainsi de protéger la lèvre d'étanchéité 15 contre les forts pics de pression du fluide incompressible, et de ce fait d'améliorer la fiabilité du dispositif d'étanchéité 2.

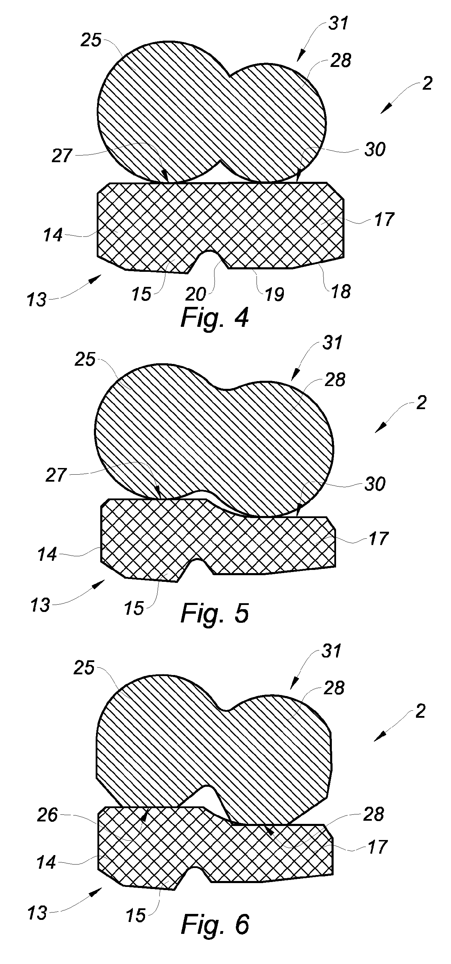

La figure 4 représente un deuxième mode de réalisation du dispositif d'étanchéité 2 qui diffère de celui représenté aux figures 1 à 3 essentiellement en ce que l'élément de maintien 28 présente une hauteur radiale et une section inférieures à celles de l'élément d'étanchéité externe 25, et en ce que les surfaces d'appui externes 27, 30 ménagées respectivement sur la portion d'étanchéité interne 14 et la portion de protection 17 sont cylindriques et s'étendent parallèlement à l'axe longitudinal A de la bague d'étanchéité interne 13 et dans le prolongement l'une de l'autre. Une telle conception de l'élément de maintien 28 permet notamment d'augmenter la section de la portion de protection 17, et donc d'augmenter la résistance à la rupture de cette dernière.

La figure 5 représente un troisième mode de réalisation du dispositif d'étanchéité 2 qui diffère de celui représenté aux figures 1 à 3 essentiellement en ce que la surface d'appui externe 30 ménagée sur la portion de protection 17 est cylindrique et s'étend parallèlement à l'axe longitudinal A de la bague d'étanchéité interne 13, et en ce que la surface d'appui externe 30 est située radialement en retrait de la surface d'appui externe 27 ménagée sur la portion d'étanchéité externe 14. Ces dispositions permettent de limiter les risques de déplacement axial de la bague d'étanchéité interne à l'encontre de l'arrivée de fluide hydraulique, et également de diminuer la section de la portion de protection 17, donc de faciliter le montage de la bague d'étanchéité interne 13 dans le logement annulaire 6.

La figure 6 représente un quatrième mode de réalisation du dispositif d'étanchéité 2 qui diffère de celui représenté à la figure 5 essentiellement en ce que les surfaces d'appui internes 26, 29 ménagées respectivement sur l'élément d'étanchéité externe 25 et l'élément de maintien 28 sont cylindriques et s'étendent parallèlement à l'axe longitudinal A de la bague d'étanchéité interne 13. Ces dispositions permettent d'améliorer la stabilité du dispositif d'étanchéité 2.

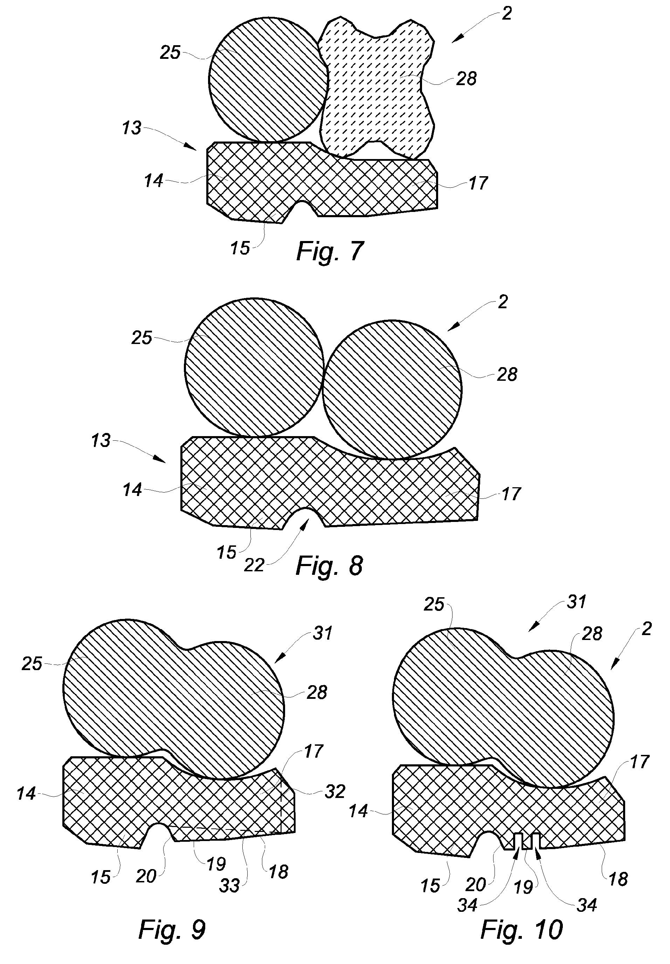

La figure 7 représente un cinquième mode de réalisation du dispositif d'étanchéité 2 qui diffère de celui représenté à la figure 5 essentiellement en ce que l'élément de maintien 28 et l'élément d'étanchéité 25 externe sont distincts l'un de l'autre. Selon ce mode de réalisation de l'invention, l'élément d'étanchéité externe 25 est formé par un joint torique et l'élément de maintien 28 est formé par un joint annulaire à quatre lobes, et plus précisément un joint annulaire comprenant une section à quatre lobes, soit deux lobes radialement intérieurs et deux lobes radialement extérieurs. Une telle configuration de l'élément de maintien 28 permet de répartir les efforts de compression exercés par l'élément de maintien 28 sur la portion de protection 17 en deux points d'application, et donc de répartir plus régulièrement ces efforts de compression.

La figure 8 représente un cinquième mode de réalisation du dispositif d'étanchéité 2 qui diffère de celui représenté aux figures 1 à 3 essentiellement en ce que l'élément de maintien 28 et l'élément d'étanchéité externe 25 sont formés respectivement par deux joints toriques de sections et de rayons identiques. Ces dispositions permettent de réduire les coûts de fabrication du dispositif d'étanchéité 2.

La figure 9 représente un sixième mode de réalisation du dispositif d'étanchéité 2 qui diffère de celui représenté aux figures 1 à 3 essentiellement en ce que la portion de protection 17 comprend au moins une encoche radiale 32 débouchant dans la face d'extrémité 21 de la portion de protection 17 et/ou au moins au moins une encoche longitudinale interne 33 débouchant dans les première, deuxième et troisième surfaces de protection 18, 19, 20.

La présence d'une encoche radiale 32 telle que définie ci-dessus permet, en cas de déplacement du dispositif d'étanchéité 2 au contact de la paroi latérale 9 du logement annulaire 6 dû à une pression élevée de liquide provenant du canal de fluide 11, d'assurer un passage de fluide provenant du canal de fluide 8 entre la face d'extrémité 21 de la portion de protection 17 et la paroi latérale 23 du logement annulaire 6, et donc un retour du dispositif d'étanchéité 2 dans sa position optimale de fonctionnement, telle que représentée à la figure 3.

La présence d'une encoche longitudinale interne 33 telle que définie ci-dessus permet de décomprimer le volume annulaire délimitée par la lèvre d'étanchéité 15 et la troisième surface de protection 20 dans le cas où une pression inattendue et élevée viendrait se créer dans ce volume annulaire. Ces dispositions permettent ainsi de limiter les risques d'endommagement du dispositif d'étanchéité 2.

Avantageusement, la ou chaque encoche radiale 32 débouche également dans la première surface de protection 18 et dans le chanfrein externe 23.

Selon une variante de réalisation, la ou chaque encoche longitudinale interne 33 peut également déboucher dans la face d'extrémité 21 de la portion de protection 17.

La figure 10 représente un sixième mode de réalisation du dispositif d'étanchéité 2 qui diffère de celui représenté aux figures 1 à 3 essentiellement en ce que la portion de protection 17 comporte au moins une rainure annulaire 34 débouchant dans la deuxième surface de protection 19, et par exemple deux rainures annulaires 34 décalées axialement. Une telle rainure annulaire 34 permet de générer une chambre annulaire de décompression, et donc d'augmenter l'effet cumulé des deuxième et troisième surfaces de protection 19, 20. Il en résulte une amélioration de la protection de la lèvre d'étanchéité 15. Selon une variante de réalisation, la portion de protection 17 pourrait comporter au moins une rainure annulaire débouchant dans la première surface de protection 18.

Comme il va de soi, l'invention ne se limite pas aux seules formes d'exécution de ce dispositif d'étanchéité, décrites ci-dessus à titre d'exemples, elle en embrasse au contraire toutes les variantes de réalisation tellles que revindiquées.

## Revendications

1. Appareil hydraulique à percussions (3), comprenant :
- un corps de guidage (4) comportant un alésage (5) et un logement annulaire (6) ménagé sur le corps de guidage (4) et débouchant dans l'alésage (5),
- un piston de frappe (7) monté coulissant à l'intérieur de l'alésage (5) et agencé pour être entraîné de façon alternative par un fluide incompressible, et
- un dispositif d'étanchéité (2) monté dans le logement annulaire (6) ménagé sur le corps de guidage (4) de manière à réaliser une étanchéité entre le corps de guidage (4) et le piston de frappe (7), le dispositif d'étanchéité (2) comprenant au moins :
- une bague d'étanchéité interne (13) comprenant une portion d'étanchéité interne (14), la portion d'étanchéité interne (14) étant annulaire et comportant une lèvre d'étanchéité (15) destinée à coopérer de manière étanche avec la surface extérieure du piston de frappe (7),
- un élément d'étanchéité externe (25) distinct de la bague d'étanchéité interne (13) et monté autour de la portion d'étanchéité interne (14), l'élément d'étanchéité externe (25) étant annulaire et destiné à prendre appui de manière étanche dans le fond du logement annulaire (6),
**caractérisé en ce que** la bague d'étanchéité interne (13) comporte :
- une portion de protection (17) annulaire décalée axialement par rapport à la portion d'étanchéité interne (14), la portion de protection (17) étant délimitée intérieurement par au moins une surface de protection convergente (18), la surface de protection convergente (18) étant annulaire et convergeant en direction de la lèvre d'étanchéité (15), et
- une gorge annulaire (22) débouchant vers l'intérieur de la bague d'étanchéité interne (13), la gorge annulaire (22) étant disposée entre la lèvre d'étanchéité et la surface de protection convergente (18),
et **en ce que** la portion de protection (17) est agencée pour délimiter, en conditions d'utilisation, un passage d'écoulement annulaire avec le piston de frappe (7).

2. Appareil hydraulique à percussions (3) selon la revendication 1, dans lequel la surface de protection convergente (18) s'étend à partir d'une extrémité de la bague d'étanchéité interne (13).

3. Appareil hydraulique à percussions (3) selon la revendication 1 ou 2, dans lequel la portion de protection (17) est délimitée intérieurement en outre par au moins une surface de protection divergente (20) annulaire et divergeant en direction de la lèvre d'étanchéité (15), la surface de protection divergente (20) étant disposée entre la surface de protection convergente (18) et la lèvre d'étanchéité (15), et délimitant au moins en partie la gorge annulaire (22).

4. Appareil hydraulique à percussions (3) selon l'une des revendications 1 à 3, dans lequel la surface de protection convergente (18) et/ou la surface de protection divergente (20) sont sensiblement tronconiques.

5. Appareil hydraulique à percussions (3) selon l'une des revendications 1 à 4, dans lequel la portion de protection (17) est délimitée intérieurement en outre par au moins une surface de protection intermédiaire (19) sensiblement cylindrique et disposée entre la surface de protection convergente (18) et la gorge annulaire (22).

6. Appareil hydraulique à percussions (3) selon la revendication 5 en combinaison avec la revendication 3, dans lequel la surface de protection intermédiaire (19) est disposée entre la surface de protection convergente (18) et la surface de protection divergente (20).

7. Appareil hydraulique à percussions (3) selon la revendication 5 ou 6, dans lequel la surface de protection intermédiaire (19) s'étend dans le prolongement de la surface de protection convergente (18).

8. Appareil hydraulique à percussions (3) selon l'une des revendications 5 à 7 en combinaison avec la revendication 3, dans lequel la surface de protection divergente (20) s'étend dans le prolongement de la surface de protection intermédiaire (19).

9. Appareil hydraulique à percussions (3) selon l'une des revendications 1 à 8, dans lequel au moins l'une parmi les surfaces de protection convergente, intermédiaire et divergente (18, 19, 20) s'étend sensiblement coaxialement à l'axe longitudinal (A) de la bague d'étanchéité interne (13).

10. Appareil hydraulique à percussions (3) selon l'une des revendications 1 à 9, lequel comprend un élément de maintien (28) distinct de la bague d'étanchéité interne (13) et monté autour de la portion de protection (17), l'élément de maintien (28) étant annulaire et destiné à prendre appui de manière étanche dans le fond du logement annulaire (6).

11. Appareil hydraulique à percussions (3) selon la revendication 10, dans lequel l'élément d'étanchéité externe (25) et l'élément de maintien (28) comportent respectivement une première et une deuxième surfaces d'appui internes (26, 29), et dans lequel la portion d'étanchéité interne (13) et la portion de protection (17) comportent respectivement une première et une deuxième surfaces d'appui externes (27, 30) agencées pour coopérer respectivement avec les première et deuxième surfaces d'appui internes (26, 29).

12. Appareil hydraulique à percussions (3) selon l'une des revendications 1 à 11, dans lequel la bague d'étanchéité interne (13) comporte, à chacune de ses extrémités, un chanfrein externe annulaire (23, 24).

13. Appareil hydraulique à percussions (3) selon l'une des revendications 1 à 12, dans lequel la portion de protection (17) comprend au moins une encoche radiale (32) débouchant dans la face d'extrémité (21) de la bague d'étanchéité interne (13) opposée à la lèvre d'étanchéité (15) par rapport à la gorge annulaire (22).

14. Appareil hydraulique à percussions (3) selon l'une des revendications 1 à 13, dans lequel la portion de protection (17) comprend au moins une encoche longitudinale interne (33) débouchant dans la gorge annulaire (22).

15. Appareil hydraulique à percussions (3) selon l'une des revendications 1 à 14, dans lequel la portion de protection (17) comporte au moins une rainure annulaire (34) débouchant dans la surface de protection convergente (18) et/ou la surface de protection intermédiaire (19).

## Patentansprüche

1. Hydraulische Schlagvorrichtung (3), Folgendes umfassend:
- ein Führungsgehäuse (4), eine Bohrung (5) umfassend, sowie eine ringförmige Aufnahme (6), die am Führungsgehäuse (4) angeordnet ist, und in die Bohrung (5) mündet,
- einen Schlagkolben (7), der gleitend im Inneren der Bohrung (5) montiert ist und angeordnet ist, um in hin- und hergehender Form von einer inkompressiblen Flüssigkeit angetrieben zu werden, und
- eine Dichtungsvorrichtung (2), die in der ringförmigen Aufnahme (6) montiert ist, welche am Führungsgehäuse (4) angeordnet ist, um eine Abdichtung zwischen dem Führungsgehäuse (4) und dem Schlagkolben (7) vorzunehmen, wobei die Dichtungsvorrichtung (2) zumindest Folgendes umfasst:
- einen inneren Dichtungsring (13), einen inneren Dichtungsabschnitt (14) umfassend, wobei der innere Dichtungsabschnitt (14) ringförmig ist und eine Dichtlippe (15) umfasst, die dazu bestimmt ist, in dichter Form mit der Außenfläche des Schlagkolbens (7) zusammenzuwirken,
- ein äußeres Dichtungselement (25), das vom Dichtungsring (13) getrennt ist, und um den inneren Dichtungsabschnitt (14) herum montiert ist, wobei das äußere Dichtungselement (25) ringförmig ist und dazu bestimmt ist, sich in dichter Form am Boden der ringförmigen Aufnahme (6) anzulegen, **dadurch gekennzeichnet, dass** der innere Dichtungsring (13) Folgendes umfasst:
- einen ringförmigen Schutzabschnitt (17), der im Verhältnis zum inneren Dichtungsabschnitt (14) axial versetzt ist, wobei der Schutzabschnitt (17) innen durch zumindest eine konvergierende Schutzfläche (18) eingegrenzt wird, wobei die konvergierende Schutzfläche (18) ringförmig ist und in Richtung der Dichtlippe (15) konvergiert, und
- eine ringförmige Nut (22), die ins Innere des inneren Dichtungsrings (13) mündet, wobei die ringförmige Nut (22) zwischen der Dichtlippe und der konvergierenden Schutzfläche (18) angeordnet ist,
und dadurch, dass der Schutzabschnitt (17) angeordnet ist, um unter Betriebsbedingungen mit dem Schlagkolben (7) einen ringförmigen Strömungsdurchgang einzugrenzen.

2. Hydraulische Schlagvorrichtung (3) nach Anspruch 1, wobei sich die konvergierende Schutzfläche (18) von einem Ende des inneren Dichtungsrings (13) aus erstreckt.

3. Hydraulische Schlagvorrichtung (3) nach Anspruch 1 oder 2, wobei der Schutzabschnitt (17) innen darüber hinaus durch zumindest eine ringförmige, und in Richtung der Dichtlippe (15) divergierende, Schutzfläche (20) eingegrenzt wird, wobei die divergierende Schutzfläche (20) zwischen der konvergierenden Schutzfläche (18) und der Dichtungslippe (15) angeordnet ist, und zumindest einen Teil der ringförmigen Nut (22) eingrenzt.

4. Hydraulische Schlagvorrichtung (3) nach einem der Ansprüche 1 bis 3, wobei die konvergierende Schutzfläche (18) und/ oder die divergierende Schutzfläche (20) in etwa kegelstumpfförmig sind.

5. Hydraulische Schlagvorrichtung (3) nach einem der Ansprüche 1 bis 4, wobei der Schutzabschnitt (17) innen darüber hinaus durch zumindest eine Zwischenschutzfläche (19) eingegrenzt wird, die in etwa zylindrisch ist und zwischen der konvergierenden Schutzfläche (18) und der ringförmigen Nut (22) angeordnet ist.

6. Hydraulische Schlagvorrichtung (3) nach Anspruch 5, in Verbindung mit dem Anspruch 3, wobei die Zwischenschutzfläche (19) zwischen der konvergierenden Schutzfläche (18) und der divergierenden Schutzfläche (20) angeordnet ist.

7. Hydraulische Schlagvorrichtung (3) nach Anspruch 5 oder 6, wobei sich die Zwischenschutzfläche (19) in der Verlängerung der konvergierenden Schutzfläche (18) erstreckt.

8. Hydraulische Schlagvorrichtung (3) nach einem der Ansprüche 5 bis 7, in Verbindung mit dem Anspruch 3, wobei sich die divergierende Schutzfläche (20) in der Verlängerung der Zwischenschutzfläche (19) erstreckt.

9. Hydraulische Schlagvorrichtung (3) nach einem der Ansprüche 1 bis 8, wobei sich zumindest eine der konvergierenden, Zwischen- und divergierenden Schutzflächen (18, 19, 20) in etwa koaxial zur Längsachse (A) des inneren Dichtungsrings (13) erstreckt.

10. Hydraulische Schlagvorrichtung (3) nach einem der Ansprüche 1 bis 9, welches ein Festhalteelement (28) umfasst, das vom inneren Dichtungsring (13) getrennt ist und um den Schutzabschnitt (17) herum montiert ist, wobei das Festhalteelement (28) ringförmig ist und dazu bestimmt ist, sich in dichter Form am Boden der ringförmigen Aufnahme (6) anzulegen.

11. Hydraulische Schlagvorrichtung (3) nach Anspruch 10, wobei das äußere Dichtungselement (25) und das Festhalteelement (28) jeweils eine erste und eine zweite innere Auflagefläche (26, 29) umfassen, und wobei der innere Dichtungsabschnitt (13) und der Schutzabschnitt (17) jeweils eine erste und eine zweite äußere Auflagefläche (27, 30) umfassen, die angeordnet sind, um jeweils mit der ersten und der zweiten inneren Auflagefläche (26, 29) zusammenzuwirken.

12. Hydraulische Schlagvorrichtung (3) nach einem der Ansprüche 1 bis 11, wobei der innere Dichtungsring (13) an jedem seiner Enden eine äußere ringförmige Fase (23, 24) umfasst.

13. Hydraulische Schlagvorrichtung (3) nach einem der Ansprüche 1 bis 12, wobei der Schutzabschnitt (17) zumindest eine radiale Kerbe (32) umfasst, die in die Endfläche (21) des inneren Dichtungsrings (13) gegenüber der Dichtlippe (15) im Verhältnis zur ringförmigen Nut (22) einmündet.

14. Hydraulische Schlagvorrichtung (3) nach einem der Ansprüche 1 bis 13, wobei der Schutzabschnitt (17) zumindest eine längliche innere Kerbe (33) umfasst, die in die ringförmige Nut (22) einmündet.

15. Hydraulische Schlagvorrichtung (3) nach einem der Ansprüche 1 bis 14, wobei der Schutzabschnitt (17) zumindest eine ringförmige Rille (34) umfasst, die in die konvergierende Schutzfläche (18) und/ oder in die Zwischenschutzfläche (19) einmündet.

## Claims

1. A hydraulic percussion apparatus (3), comprising:
- a guide body (4) including a bore (5) and an annular housing (6) arranged on the guide body (4) and opening into the bore (5),
- a striking piston (7) slidably mounted inside the bore (5) and arranged to be alternately driven by an incompressible fluid, and
- a sealing device (2) mounted in the annular housing (6) arranged on the guide body (4) to achieve sealing between the guide body (4) and the striking piston (7), the sealing device (2) comprising at least :
- one inner sealing ring (13) comprising an inner sealing portion (14), the inner sealing portion (14) being annular and including a sealing lip (15) intended to sealingly cooperate with the outer surface of the striking piston (7),
- one outer sealing element (25) distinct from the inner sealing ring (13) and mounted around the inner sealing portion (14), the outer sealing element (25) being annular and intended to sealingly bear at the bottom of the annular housing (6),
**characterized in that** the inner sealing ring (13) includes:
- an annular protective portion (17) axially shifted relative to the inner sealing portion (14), the protective portion (17) being internally delimited by at least one converging protective surface (18), the converging protective surface (18) being annular and converging towards the sealing lip (15), and
- an annular groove (22) opening into the inside of the inner sealing ring (13), the annular groove (22) being disposed between the sealing lip and the converging protective surface (18),
and **in that** the protective portion (17) is arranged to delimit, in use, an annular flowing passageway with the striking piston (7).

2. The hydraulic percussion apparatus (3) according to claim 1, wherein the converging protective surface (18) extends from an end of the inner sealing ring (13).

3. The hydraulic percussion apparatus (3) according to claim 1 or 2, wherein the protective portion (17) is further internally delimited by at least one diverging protective surface (20), annular and diverging towards the sealing lip (15), the diverging protective surface (20) being disposed between the converging protective surface (18) and the sealing lip (15), and delimiting at least partially the annular groove (22).

4. The hydraulic percussion apparatus (3) according to any of claims 1 to 3, wherein the converging protective surface (18) and/or the diverging protective surface (20) are substantially truncated cone-shaped.

5. The hydraulic percussion apparatus (3) according to any of claims 1 to 4, wherein the protective portion (17) is further internally delimited by at least one intermediate protective surface (19), substantially cylindrical and disposed between the converging protective surface (18) and the annular groove (22).

6. The hydraulic percussion apparatus (3) according to claim 5 in combination with claim 3, wherein the intermediate protective surface (19) is disposed between the converging protective surface (18) and the diverging protective surface (20).

7. The hydraulic percussion apparatus (3) according to claim 5 or 6, wherein the intermediate protective surface (19) extends in the extension of the converging protective surface (18).

8. The hydraulic percussion apparatus (3) according to any of claims 5 to 7 in combination with claim 3, wherein the diverging protective surface (20) extends in the extension of the intermediate protective surface (19).

9. The hydraulic percussion apparatus (3) according to any of claims 1 to 8, wherein at least one among the converging, intermediate and diverging protective surfaces (18, 19, 20) extends substantially coaxially with the longitudinal axis (A) of the inner sealing ring (13).

10. The hydraulic percussion apparatus (3) according to any of claims 1 to 9, further comprising a holding element (28) distinct from the inner sealing ring (13) and mounted around the protective portion (17), the holding element (28) being annular and intended to sealingly bear at the bottom of the annular housing (6).

11. The hydraulic percussion apparatus (3) according to claim 10, wherein the outer sealing element (25) and the holding element (28) respectively include a first and a second inner bearing surfaces (26, 29), and wherein the inner sealing portion (13) and the protective portion (17) include respectively a first and a second outer bearing surfaces (27, 30) arranged to cooperate respectively with the first and second inner bearing surfaces (26, 29).

12. The hydraulic percussion apparatus (3) according to any of claims 1 to 11, wherein the inner sealing ring (13) includes, at each of its ends, an annular outer chamfer (23, 24).

13. The hydraulic percussion apparatus (3) according to any of claims 1 to 12, wherein the protective portion (17) comprises at least one radial notch (32) opening into the end face (21) of the inner sealing ring (13) opposite to the sealing lip (15) relative to the annular groove (22).

14. The hydraulic percussion apparatus (3) according to any of claims 1 to 13, wherein the protective portion (17) comprises at least one inner longitudinal notch (33) opening into the annular groove (22).

15. The hydraulic percussion apparatus (3) according to any of claims 1 to 14, wherein the protective portion (17) includes at least one annular slot (34) opening into the converging protective surface (18) and/or the intermediate protective surface (19).
